(19) Europäisches Patentamt
European Patent Office
Office européen des brevets

(11) EP 3 056 549 B1

(12) **EUROPEAN PATENT SPECIFICATION**

(45) Date of publication and mention of the grant of the patent:
**16.11.2022 Bulletin 2022/46**

(21) Application number: **15154446.7**

(22) Date of filing: **10.02.2015**

(51) International Patent Classification (IPC):
***C09B 67/00*** (2006.01) ***C09B 69/10*** (2006.01)
***C09B 67/22*** (2006.01) ***D06P 3/79*** (2006.01)
***D06P 1/48*** (2006.01) ***D06P 1/52*** (2006.01)
***D06P 1/54*** (2006.01)

(52) Cooperative Patent Classification (CPC):
**C09B 68/446; C09B 67/0033; C09B 67/004; C09B 67/0041; C09B 67/0042; C09B 67/0044; C09B 67/0045; C09B 69/101; C09B 69/103; C09B 69/106; D06P 1/48; D06P 1/5242; D06P 1/5278; D06P 1/54;** D06P 3/521; (Cont.)

(54) **COLORANT COMPOSITION AND USES THEREOF**

FARBMITTELZUSAMMENSETZUNG UND DEREN VERWENDUNGEN

COMPOSITION DE COLORANT ET SES UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2016 Bulletin 2016/33**

(73) Proprietor: **Ahlstrom Corporation**
**00101 Helsinki (FI)**

(72) Inventors:
- **Fantini, Diego**
  **38 780 Pont-Eveque (FR)**
- **Dufour, Dr. Menno**
  **69 007 Lyon (FR)**

(74) Representative: **Hoffmann Eitle**
**Patent- und Rechtsanwälte PartmbB**
**Arabellastraße 30**
**81925 München (DE)**

(56) References cited:
**EP-A1- 2 835 419**
**EP-A1- 2 835 466**
**WO-A1-2009/030614**
**GB-A- 780 288**
**US-A- 4 171 404**
**US-A- 4 228 259**
**US-A1- 2003 139 320**

EP 3 056 549 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
D06P 3/791

## Description

### Technical Field

The present invention relates to a colorant composition that is able to impart color to a wide variety of fibrous substrates, meaning that the colorant composition is a versatile feedstock for use in wide variety of coloring processes, such as printing and dyeing. The resulting color is highly resistant to washing and mechanical abrasion, and can be added to the fibrous substrate using more efficient processes than those previously known.

### Background Art

Color is often added to everyday fiber-containing items in order to improve their aesthetics or to add useful information such as words, symbols and warning signs. However, existing techniques for imparting color to fibrous substrates, such as by conventional dyeing and printing, suffer from significant disadvantages. Two of the most important of these disadvantages are a lack of versatility and inconvenient processing conditions.

The lack of versatility can manifest itself as limiting the use of a particular dye molecule to a narrow subset of fibers in a fibrous substrate in order to achieve acceptable color permanency. For example, traditional methods for printing or dyeing fibrous web involve the use of dyes which chemically bond or chemically interact directly to the fiber surface of the web. The choice of a dye therefore depends upon the chemical nature of the fibers to be dyed, as it is necessary for the fabric fibers and dye molecules to have complimentary chemical groups so that chemical bonds can form between them. For example, acrylic fibers tend to be dyed with basic dyes, whereas nylon and protein fibers such as wool and silk tend to be dyed with acid dyes. Cotton is typically dyed with a range of dye types, including vat dyes, reactive dyes and direct dyes. Using the 'wrong' dye for a particular type of fiber results in little of no color fastness because the non-bonded dye molecules are lost by washing, mechanical abrasion and so forth. A colorant composition that imparts color to a wider range of fibers and with good color fastness would therefore be a significant asset to this industry.

A further significant problem associated with traditional dyeing techniques is that they are limited by the number of functional groups available on the fiber surface that are able to interact with dyes. The limited number of functional groups limits the amount of dye that can be fixed on the fiber, which consequently limits the achievable color intensity. This also applies to fibrous webs that are considered easily colorable, such as cotton. Pre-treatments have been devised in an effort to improve and increase the fixation of dyes to fibers, but these pretreatments suffer from drawbacks. Examples of pre-treatments used in the textile industry include the chemical modification of cotton fiber using carbon disulfide or glycidyl trimethyl ammonium chloride, but these chemicals are toxic/harmful and increase the cost of the overall process.

Moreover, dyes of the type described above cannot be used to impart color to chemically inert fibers, such as polyalkylene fibers, since it is impossible to form the necessary chemical affinity or bond between the dye and the fiber surface. Whilst it is possible to increase the chemical affinity between the dye and the inert fibers by modifying their molecular structure or their composition during fiber production, this approach risks impairing the useful properties of the fiber which are often intrinsically linked to molecular structure/fiber composition. For example, the ability of synthetic fibers such as polypropylene to form lightweight, flexible materials that have good stain resistance, low moisture absorption and good resistance to degradation by chemicals generally results from their chemical structure.

Despite the difficulty encountered when adding color to synthetic fibers, a certain amount of progress has been made. Polypropylene, a notoriously difficult material to color, can be colored in bulk during manufacture by mixing a colorant, such as a dye or pigment, to the molten polymer prior to spinning. However, this procedure is in essence an industrial-scale process that requires industrial-scale equipment and, therefore, industrial-scale financial investment. Such a process is not realistically accessible to users interested in small-scale production, such as domestic users. This type of process is, moreover, limited to the manufacturing stage, as the color is added prior to spinning.

US 4,171,404 aims at improving the acid dyeing properties of polyester or polyolefin materials.

It is also possible to color synthetic fiber-containing materials using dyes by printing, but the surface intended for printing must be pre-emptively activated by oxidation or chemical functionalization. One partially successful method is a so-called corona treatment, in which low temperature corona discharge plasma is used to chemically modify the surface prior to printing. However, only relatively poor color intensity is achievable by this technique and it requires specialized equipment, such as a high-frequency power generator and a high-voltage transformer, which is prohibitively expensive for many potential users. Moreover, the corona treatment tends to diminish over time, and so a further treatment becomes necessary in order to replenish the initial affinity for the colorant.

As mentioned at the outset, a further major disadvantage of existing coloring technology is that inconvenient process steps are often required. A standard process typically includes the following steps: pre-treatment of fibrous web, impression of the color paste on the fabric using a printing method, drying the web, fixing the printing with steam or hot air (for pigments), after process treatments on the fibrous web (such as washout of the unfixed excess of dye, or dangerous

chemicals constituting the color paste) and the treatment of the waste water from the process containing unfixed dyes and coloring auxiliaries. In other processes, inconvenient steps such as corona discharge treatment are employed.

A number of problems therefore remain unsolved in this technical field. There remains a need for a more versatile way of adding color to fiber-containing materials. Ideally, the method would be universal in respect of the type of fibers present in the substrate, as this would enable the user to add color to a fiber-containing substrate irrespective of the types of fiber present. It would also be advantageous if high color fastness could be achieved, irrespective of the type of fiber present in the substrate.

A further benefit would be if the new approach is accessible to all potential users, from large industrial operations through to small- and medium-sized enterprises (SMEs) and individuals. To achieve this, the process would ideally be affordable, operationally simple and not require specialist equipment, such as a corona discharge apparatus. It would also be advantageous if the means for imparting color can be implemented after the fibers have been produced, rather than during production of the fibers, as this would further increase the versatility of the new approach. These and others needs are met by the present invention.

## Summary of the Invention

The present invention addresses these needs by providing a colorant comprising:

a water-soluble cationic polymer comprising primary amine groups;
a water-soluble crosslinker polymer including repeating units comprising halohydrin and/or epoxide groups that are capable of forming covalent crosslinks with the primary amine groups of the cationic polymer; and
a dye (A) comprising at least one acid salt group per molecule; and/or
a dye (B) that is capable of forming at least one covalent bond per dye molecule with the cationic polymer.

This composition is able to successfully impart color to a part or the whole of a wide variety of fiber-containing substrate, including substrates containing notoriously dye-resistant fibers. This versatility is achieved without the need for chemical or physical pre-treatments of the fiber-containing substrates prior to applying the color, which is a further benefit of the colorant composition. The colorant composition is therefore a versatile feedstock for the coloring industry, including both large-scale industrial enterprises and those enterprises without the financial resources to invest in specialized manufacturing equipment.

Without wishing to be bound by theory, it is believed that the cationic polymer and the crosslinker polymer become entwined and entangled with the fibers present in the substrate when the colorant composition is applied to the substrate. Once the fibers and polymers are entangled, crosslinking between the cationic polymer and the crosslinker polymer occurs which results in the formation of a three dimensional network of crosslinked cationic/crosslinker polymer chains that are irreversibly anchored around the fibers of the substrate. This three dimensional network is believed to held the dye in place such that the overall effect is that the dye is indirectly adhered to the substrate via the three-dimensional network of crosslinked cationic/crosslinker polymer chains. As the three-dimensional network is anchored to the substrate fibers by physical entanglement rather than chemical bonding, although chemical bonding can optionally also occur, the colorant composition is able to impart color irrespective of the molecular structure of the fibers in the substrate.

A number of other benefits ensue from the way in which the colorant composition is able to add color to a fiber-containing substrate. As will be appreciated from the description of the three-dimensional network above, the fibers do not need to be pretreated in order for the colorant composition to impart color to a fiber-containing substrate. The step of adding color is therefore relatively facile. Moreover, the color can be imparted to a pre-constructed substrate, which overcomes the drawbacks of having to add color during production of the fibers. The formation of the three-dimensional network can also be used to increase the mechanical strength of the substrate if sufficient amounts of the cationic and crosslinker polymers are present, as the crosslinked polymer chains are able to act as a binder for the fiber-containing substrate. Moreover, the high affinity/reactivity of dyes for the cationic polymer results in persistent color that shows a high resistivity against washing, such as with water and/or organic solvents.

## Figures

Figure 1: Schematic illustration of a substrate fiber entangling with a three-dimensional network comprising a cationic polymer and crosslinker polymer, wherein: the cationic polymer 1 and the crosslinker polymer 2 are mixed in Figure 1A; the mixed cationic and crosslinker polymers surround the substrate fiber 3 in Figure 1B; and the crosslinker polymer cross-links the cationic polymer in Figure 1C by reacting with the amine groups 1a of the cationic polymer.

## Description

### Definitions

Average molecular weight: unless stated otherwise, 'average molecular weight' denotes number average molecular weight.
Average: unless stated otherwise, the term 'average' denotes mean average.
Weight/Mass: references to amounts 'by weight' are intended to be synonymous with 'by mass'; these terms are used interchangeably.
Polymer: a compound comprising upwards of ten repeating units such as, for example, a homopolymer, a copolymer, a graft copolymer, a branch copolymer or a block copolymer.

### Components of the Colorant Composition

The colorant composition comprises a cationic polymer, a crosslinker polymer and a dye. These and other features of the colorant composition are discussed in detail in the following sections.

### Cationic Polymer

The cationic polymer is a polyamine, which is to say that it is a polymer comprising repeating units that have amine groups. The person skilled in the art would therefore appreciate that a polymeric polyamine will contain a large number of amine groups, such as polymers containing upwards of 50 amine groups. For example, the cationic polymer can be a polymer in which all repeating units possess an amine group, such as a homopolymer of one amine-containing repeating unit, or a copolymer of plural repeating units each possessing an amine group. Alternatively, the cationic polymer can be a copolymer possessing amine groups in only some of its repeating units. Copolymers representing the cationic polymer can be a random copolymer, block copolymer or graft copolymer, for example.
The amine groups present in the cationic polymer can be primary amines, secondary amines, tertiary amine and/or quaternary ammonium groups, provided that at least some primary amine groups are present in the cationic polymer in isolation. Different repeating units of the cationic polymer can have different amines.
The term 'amine' takes on its usual meaning of being a derivative of ammonia in which one, two or three of the ammonia hydrogen atoms has been replaced by a substituent, such as an alkyl group. In the special case of a quaternary ammonium group, the three hydrogen atoms are replaced by four substituents, thereby resulting in a cationic tetravalent nitrogen atom.
Without wishing to be bound by theory, it is believed that the amine groups serve at least two purposes. On the one hand, the amine groups (in the case of the primary and secondary amine groups) can form covalent cross-links with the crosslinker polymer. On the other hand, amine groups are also highly useful groups in terms of holding dye molecules in place, as will be discussed below. A multitude of amine groups in the cationic polymer is therefore helpful so that covalent bonds can be formed with the crosslinker polymer whilst ensuring that amine groups remain available to aid the capture of dye molecules.
Both primary ($R-NH_2$) and secondary (R-NH-R') amine groups can react with the halohydrin and/or epoxide group of the crosslinker polymer to form covalent bonds. Primary amine group can react with two reactive groups of the crosslinker polymer, forming two covalent bonds, since a primary amine group has two labile hydrogens. Secondary amines have one labile hydrogen and can thus form only one covalent bond by reacting with the crosslinker polymer. Hence the potential reactivity between functional groups can be defined in terms of the number of labile hydrogen atoms on the nitrogen atom of the amino group (i.e. the number of reactive N-H functional groups). In other words, the number of reactive N-H functional groups corresponds to the number of possible covalent bond that can form the amino groups. The number of moles of (N-H) functional groups can be calculated as follows: the number of moles of (N-H) functional groups is equal to the number of moles of secondary amine group + two times the number of moles of primary amine groups.
The cationic polymer is water soluble, wherein the water solubility of the cationic polymer is preferably ≥ 10 g/liter at 25°C, more preferably ≥ 40 g/liter at 25°C. The water solubility improves the dye-affinity of the cationic polymer as water-solubility implies hydrophilicity, which aids the retention of hydrophilic dyes. Moreover, the water-solubility of the cationic polymer means that it adopts a more open, elongated tertiary structure, by virtue of the swelling phenomenon, than polymer chains that are not water soluble, or only sparingly water soluble. The 'open' tertiary structure of the polymer chains is helpful because it means that the individual polymer chains are more likely to intertwine with fibers of the substrate that is being colored by the colorant composition. This in turn promotes the entanglement of substrate fibers and cationic polymer chains that is believed to result in the formation of an irreversibly anchored three-dimensional network of crosslinked cationic/crosslinker polymer chains. In contrast, contacting the substrate with cationic polymer

chains that have a closed, ball-like tertiary structure will not promote entanglement.

The cationic polymer is cationic, which is to say that it bears an overall positive charge in an aqueous medium at pH values of 10 or lower. The cationic character can stem from groups that have a positive charge irrespective of pH, such as a quaternary ammonium group, and/or it can stem from groups that do not have a permanent positive charge, but that do have a positive charge under the above conditions. For example, the mandatory primary amine groups of the cationic polymer can serve as the cationic group because primary amines tend to be protonated at all pH values of 10 and below. Positively charged groups are helpful for a number of reasons. In particular, the positively charged regions of the cationic polymer help to electrostatically capture dye compounds.

Examples of the cationic polymer include poly(allyl amine)s, poly(ethylene imine)s, partially hydrolyzed poly(vinylformamide)s, polyvinylamines, polyvinylamides, chitosan and copolymers of these polyamines with any other type of monomers.

The average molecular weight of the cationic polymer in isolation can in some embodiments be at least 5,000, preferably at least 20,000, and more preferably higher than 100,000, wherein higher molecular weight polymers tend to improve both the structural strength of the fiber-containing substrate and its ability to retain dyes. The upper limit of the average molecular weight of the cationic polymer is not particularly limited, but is generally less than 5,000,000, preferably less than 1,000,000. Cationic polymers having an average molecular weight below these values are preferable because aqueous solutions of these polymers are generally easier to handle, as they are not overly viscous.

The cationic polymer can also comprise side-chains having quaternary ammonium groups. Adding side-chains that possess such cationic groups can be helpful because they augment the effects explained above regarding the general cationic groups of the cationic polymer. For example, side-chain quaternary ammonium groups can be obtained by conducting a graft-type reaction on the cationic polymer using glicidyl trimethylammonium chloride, 3-chloro-2-hydroxypropyl trimethylammonium chloride or a mixture thereof as grafting reactants. For example, these groups can be bonded to amine groups of the cationic polymer, provided that sufficient amine groups remain for cross-linking and for also capturing dyes. Generally speaking, it is preferable that less than 30% of amine groups of the cationic polymer are bonded to side-chains having quaternary ammonium groups. This helps to retain a large number of uncapped amine groups for cross-linking and also helps to ensure that the viscosity of the cationic polymer does not increase to the extent that it is inconvenient to handle, in isolation and/or as part of the colorant composition.

Crosslinker Polymer

The crosslinker polymer is a water soluble polymer that is able to cross-link chains of the cationic polymer by forming covalent cross-links, which contributes to the structural integrity and insolubility of the three-dimensional network that is believed to form around the fibers of a fiber-containing substrate. The longevity of the three-dimensional network means, for example, that the appearance of the colored regions of the material will be maintained for longer, since the three-dimensional network of polymers will not break down under the action of mechanical stress, thermal stress and so forth. For example, one result of this structural integrity is that the three-dimensional network will not break down when stress is applied by mechanical rubbing, for instance. The extent to which the color adheres to the material can be measured in accordance with ASTM D5264-98(2011), for example.

The crosslinker polymer is able to form the necessary covalent cross-links because it contains halohydrin and/or epoxide groups. Halohydrin groups are characterized by the presence of a hydroxyl group and a halogen functional group on adjacent carbon atoms. The halogen can be any of fluorine, chlorine, bromine and iodine, for example. Chlorohydrin groups are particularly useful halohydrins within the scope of the present invention because they are readily obtainable and readily form cross-links with the cationic polymer. For example, the chlorohydrin illustrated in the following Formula (I) can be used in the colorant composition of the present invention:

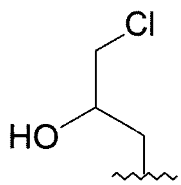

(I)

wherein the zig-zag line indicates the point at which this chlorohydrin group is joined to the crosslinker polymer.

The mechanism by which the halohydrin groups, such as the one illustrated in Formula (I), form covalent cross-links with the cationic polymer is not particularly limited. In one mechanism, the halogen atom can be displaced by reaction with a nucleophilic group of the cationic polymer. In a related mechanism, the halohydrin groups can form an intermediate epoxide group via intramolecular nucleophilic attack by the hydroxyl group of the halohydrin group on the halogen group, and the newly-formed epoxide group can then react with nucleophilic groups of the cationic polymer.

Epoxide groups are characterized by the presence of a three-membered cyclic ether. As a result of the ring-strain within the epoxide ring, epoxide groups tend to be more reactive than other cyclic ethers, which aids the formation of cross-links. For example, this ring strain can render the epoxide ring more labile towards nucleophilic attack from nucleophilic groups of the cationic polymer.

Whereas the cationic polymer can be characterized by the average number of N-H functional groups in its polymer chains, the crosslinker polymer can be characterized by the average number of halohydrin and/or epoxide functional groups.

The average molecular weight of the crosslinker polymer in isolation is not particularly limited. However, it is helpful if the average molecular weight is at least 1,000, preferably higher than 20,000, as this improves the structural integrity of the three-dimensional network. Structural integrity can be manifested in terms of the tensile strength of the material, for example. It is also helpful if the average molecular weight is lower than 5,000,000, preferably less than 1,000,000. Crosslinker polymers having an average molecular weight below these values are preferable because aqueous solutions of these polymers are generally easier to handle, as they are not overly viscous.

The crosslinker polymer is water soluble, wherein the water solubility of the crosslinker polymer is preferably ≥ 1 g/liter at 25°C, more preferably at least 3 g/liter at 25°C. Moreover, the resulting three-dimensional network tends to have a better structure when the crosslinker polymer is water soluble because, when placed in water, the water soluble polymer chains will tend to exist (by virtue of the swelling phenomenon) with a more open, elongate tertiary structure than polymer chains that are not water soluble, or only sparingly water soluble. The open tertiary structure of the polymer chains is helpful because it means that the individual polymer chains are more likely to intertwine with the individual chains of the cationic polymer and fibers present in the substrate, thereby promoting entanglement of the various fibers and polymer chains present. In contrast, contacting the substrate with crosslinker polymer chains that have a closed, ball-like tertiary structure will not aid this entanglement. The shared water solubility of both the cationic and crosslinker polymers is also helpful because the polymers will form favorable intermolecular interactions, which further promotes close intertwining and aids cross-linking.

The type of polymer used as the crosslinker polymer is not particularly limited, provided that it possesses the necessary halohydrin and/or epoxide groups. This versatility of the crosslinker polymer is yet another advantage associated with the present invention. Moreover, epoxide and/or halohydrin groups can be added to a pre-made polymer in a straightforward manner, which provides convenient access to a multitude of alternatives within the scope of the crosslinker polymer. For example, the halohydrin illustrated in Formula (I) above can be readily formed by reacting a polymer containing nucleophilic groups with epichlorohydrin.

Suitable types of polymers for use as the basis of the crosslinker polymer include polyamides, polyalkanolamines, polyamines fully reacted with halogen compounds such as epichlorohydrin, modified polydiallyldimethylammonium chloride polyamines, polyalkenes, polyalkylene oxides, polyesters, poly(meth)acrylic acids and copolymers thereof. For example, the crosslinker polymer can be a polyamide, polyvinylamine or polyallylamine (or copolymer thereof) that possess epoxide and/or halohydrin groups.

The crosslinker polymer can also comprise quaternary ammonium groups, which help to hold dye molecules in place. Such quaternary ammonium groups can, for example, be present in the polymer backbone, in the repeating units and/or in side-chains. The quaternary ammonium groups can be present in the same polymer chain as either the halohydrin groups or the epoxide groups mentioned above, or both the halohydrin groups and the epoxide groups; there is no particular limit in this regard. By way of an example, the crosslinker polymer can be a diallyl(3-chloro-2-hydroxypropyl)amine hydrochloride-diallyldimethylammonium chloride copolymer having the repeating units illustrated in following Formula (II):

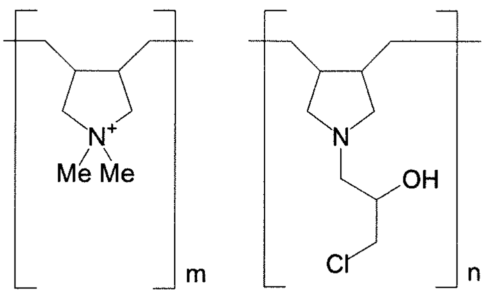

(II)

wherein the ratio of m:n in the polymer is in the range of from 1:9 to 9:1, preferably from 4:6 to 6:4. The average molecular weight is preferably higher than 1,000, more preferably higher than 20,000, and the average molecular weight is preferably lower than 5,000,000, more preferably lower than 1,000,000.

The mass ratio of the cationic polymer to the crosslinker polymer in the composition can be in the range of from

99:1 to 20:80, or from 97:3 to 50:50. This ratio helps to provide the three-dimensional network with structural strength and insolubility whilst retaining good dye-retention properties. However, it can be more helpful to define the relative amounts of the two polymers by their respective average molecular amounts of reactive functional groups, i.e. reactive (N-H) functional groups for the cationic polymer, and halohydrin and/or epoxide groups in the crosslinker polymer. It can be advantageous that the cationic and crosslinker polymers are present in relative amounts such that the ratio of the halohydrin and/or epoxide groups in the crosslinker polymer to the (N-H) functional groups in the cationic polymer is in the range of from 0.0035 to 0.0380. Without wishing to be bound by theory, it is believed that this ratio is preferential because the resulting three-dimensional network will have high strength, very low water-solubility and a high degree of dye-retention.

In another embodiment, the molecular ratio of the halohydrin and/or epoxide groups in the crosslinker polymer to the (N-H) functional groups in the cationic polymer is in the range of 0.0035 to 1.0000 when the crosslinker polymer also contains quaternary ammonium groups as described earlier, more preferably in the case where the crosslinker polymer has the formula (II). Without wishing to be bound by theory, it is believed that the range of ratios for this embodiment can be broader than the range of ratios in the previous paragraph because the crosslinker polymer in this embodiment contains quaternary ammonium groups that can contribute to retaining dye compounds.

Dye

The term 'dye' takes on its usual meaning in the art, which would be familiar to a person skilled in colorants. Dyes are classified in different ways depending on the chemical functionalities present, the application mode, product application and/or physical properties. Whilst the dye industry has devised many types of dye, the present disclosure is concerned with two types of dye, which are referred to as dye (A) and dye (B) for convenience. For the avoidance of doubt, the colorant composition can include both dye (A) and dye (B).

*Dye (A)*

Dye (A) is a dye comprising at least one acid salt group per molecule, and therefore belongs to the general class of dyes often termed acid dyes. Acid dyes are typically soluble in water and possesses affinity for amphoteric fibers but tend to have less affinity for cellulose fibers than e.g. direct dyes. However, the colorant composition disclosed herewith increases the versatility of acid dyes so that they can be used to obtain excellent results irrespective of the type of fiber present.

The nature of the acid salt group is not particularly limited, and can be, for instance, acid salt groups derived from sulfonic acids ($-S(O)_2OH$), carboxylic acids ($-CO_2H$), phenols (ArOH) and acidic heterocycles such as tetrazoles. Sulfonate and carboxylate salt groups are particularly useful embodiments, owing to the great variety of commercial dyes that possess these groups. The nature of the cation in the acid salt group is not particularly limited, and metal salts (e.g. sodium, potassium, calcium) and ammonium cations are suitable.

The number of acid salts groups per molecule is not particularly limited, and suitable numbers of acid salts groups per dye molecule include one, two, three, four, five and six acid salts groups per molecule. Moreover, dye (A) can include more than one type of acid salt group per molecule. For the avoidance of doubt, each type of acid salt group in the dye molecule can have a different cation, although the same cation is typically used for each acid salt group in a dye molecule. The concentration of dye (A) in the colorant composition is not particularly limited.

The basic structure of the dye is not particularly limited, and can, for example, be chosen based upon the desired color of the dye. For example, blue dyes tend to be based upon an anthraquinone skeleton, red dyes tend to be based upon an azobenzene skeleton and yellow/green dyes tend to be based upon a triphenylmethane skeleton (structures shown below).

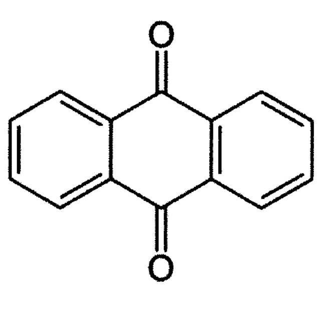
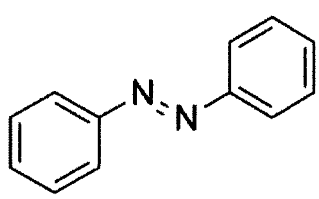
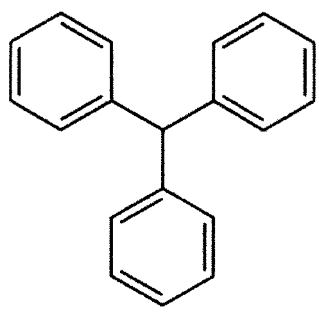

Non-limiting, representative examples of suitable dyes for use as dye (A) include those shown below:

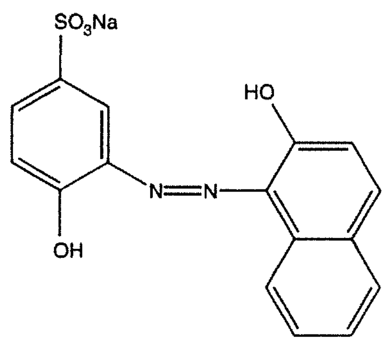

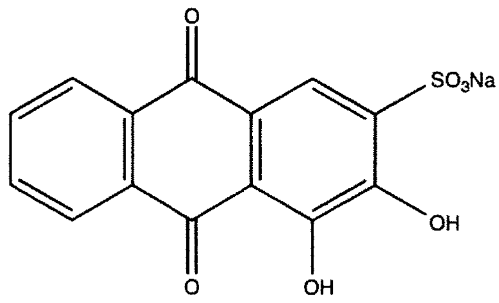

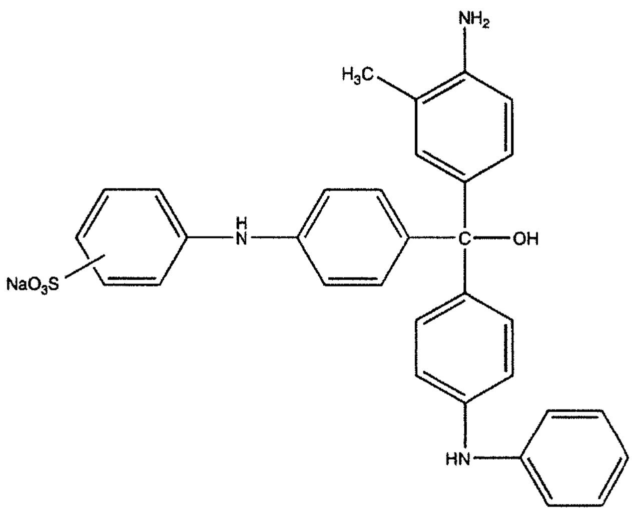

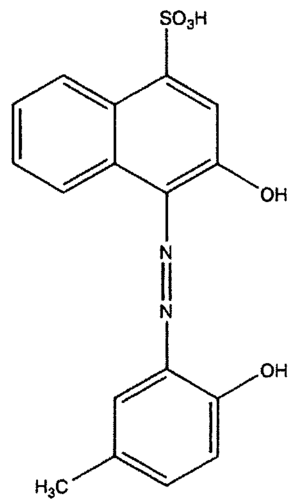

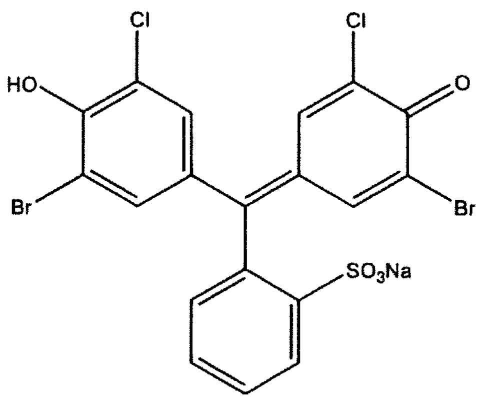

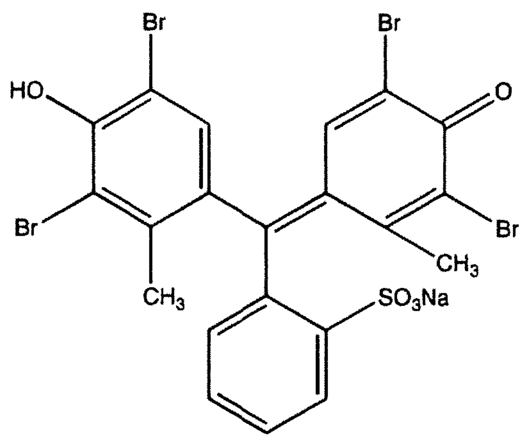

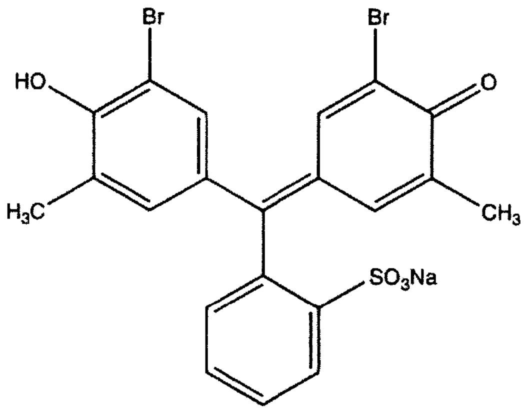

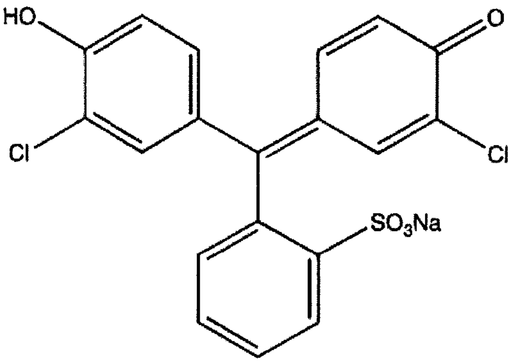

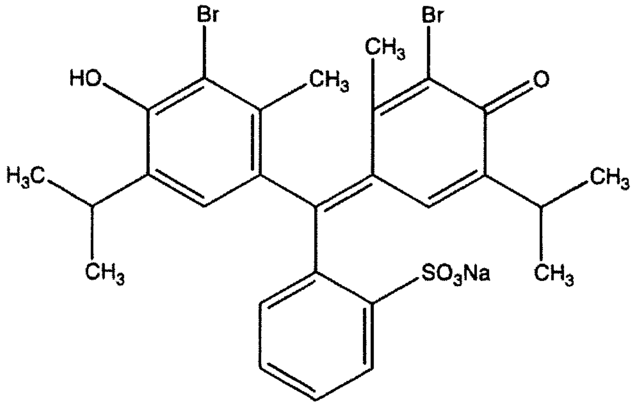

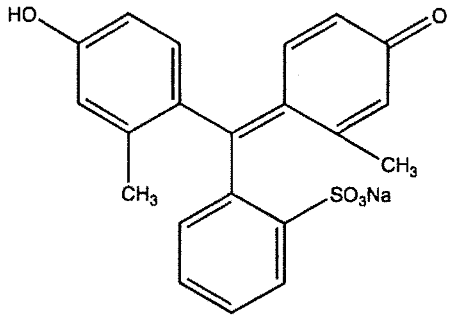

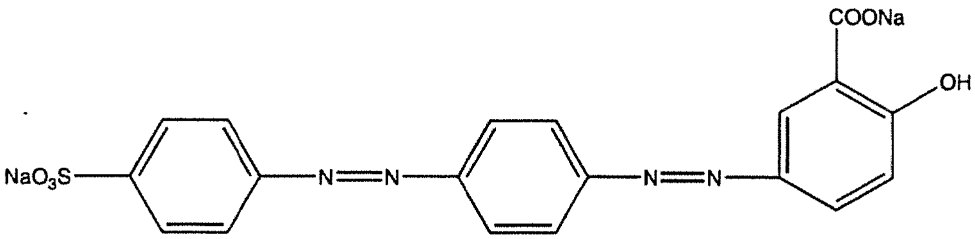

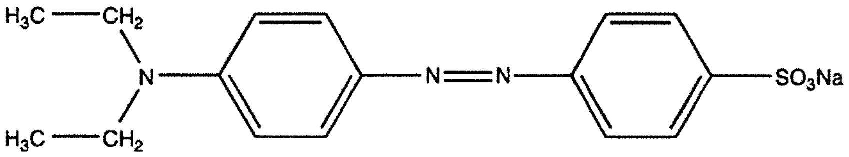

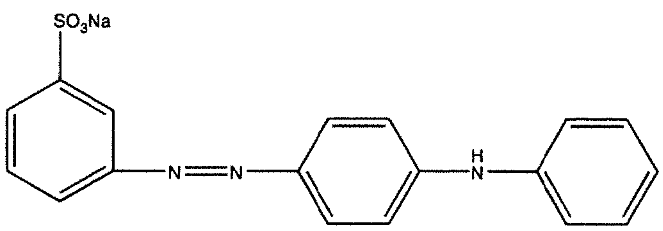

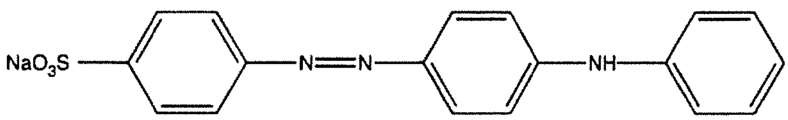

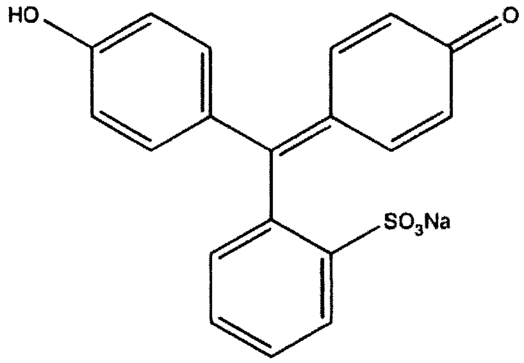

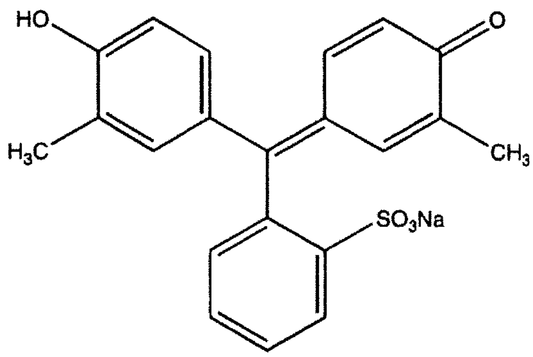

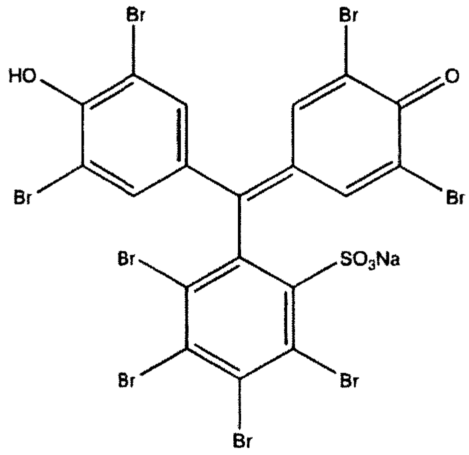

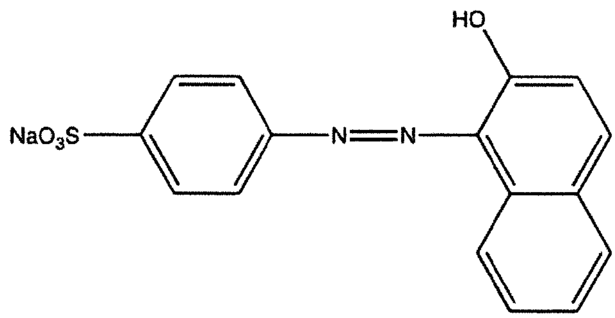

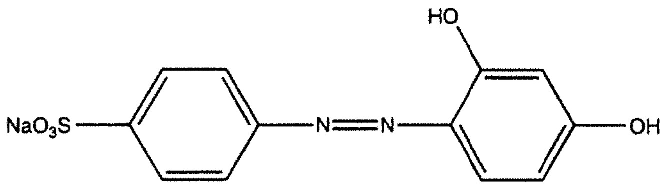

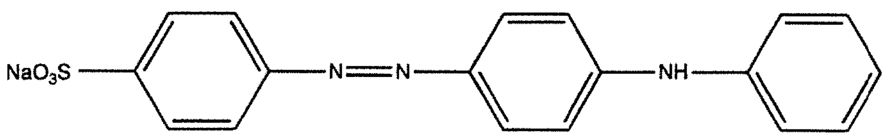

Without wishing to be bound by theory, it is believed that dye (A) has an affinity for cationic groups in the cationic and crosslinker polymers as a result of ionic attraction with the anionic acid salts groups of dye (A). This has the effect of anchoring the molecules of dye (A) to the three-dimensional network formed from the cationic and crosslinker polymers, which has the overall effect of anchoring the molecules of dye (A) indirectly to the fibers of a fiber-containing substrate.

*Dye (B)*

Dye (B) is a dye that is capable of chemically bonding to the cationic polymer, belonging to the general class of dyes often called reactive dyes. A reactive dye is typically a dye in which a chemical group is attached to dye molecule that is capable of forming a chemical bond with fibers of the substrate. These types of dyes are therefore traditionally used to color fibers having hydroxyl or amine functional groups, such as cotton, cellulose or wool. However, when using the colorant composition disclosed herewith, dye (B) can be used with a wide variety of fibers because the dye molecules form bonds with the three-dimensional network rather than the fibers of the substrate.

The ability of dye (B) to form one or more covalent bonds with the cationic polymer is derived from a chemical group(s) that is able to form such a bond. The chemical group(s) able to form such a bond are sometimes generally referred to as bridging groups and are part of the chemical structure of the dye. As the cationic polymer has a multitude

of amine groups, it is helpful if the dye (B) has a group that is capable of forming a covalent bond with an amino group. The skilled person is able to determine such groups from their general knowledge of this field, but representative examples include a functional group selected from monochlorotriazine, monofluorochlorotriazine, dichlorotriazine, dichloroquinoxaline, difluorochloropyrimidine, trichloropyrimidine, vinyl sulfone and vinyl amide.

For example, scheme (A) below shows a dye that generates a vinyl sulfone which is able to react with an amine group of the cationic polymer (where R represents the remaining part of the chemical structure of the dye and R' the cationic polymer). Scheme (B) below shows a dichlorotriazine group of a dye reacting with an amine group of the cationic polymer in a similar way (where again R represents the remaining part of the chemical structure of the dye and R' the cationic polymer).

A)

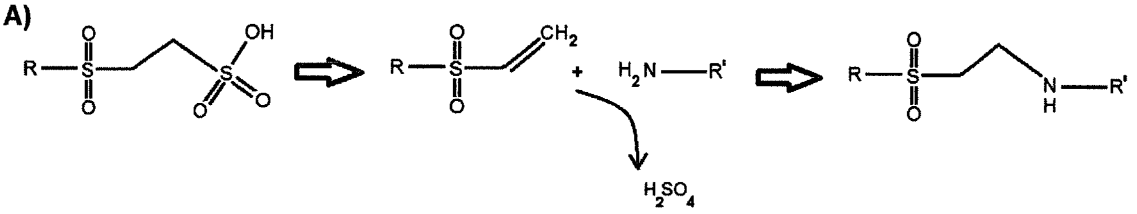

B)

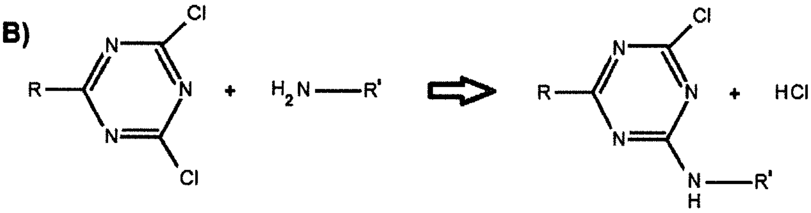

The dye (B) can alternatively/additionally include groups that are able to bond to other functional groups that might be present in the cationic polymer. For example, if the cationic polymer includes electrophilic groups, such a (meth)acrylate group, then nucleophilic groups present in the dye (B), such as amines, alcohols and thiols, are able to form covalent bonds.

The skeleton of the dye molecule used as dye (B) is not particularly limited, and can be suitablby selected by a person skilled in this field. Representative examples of dye (B) include Basilen E®, Basilen P®, Cibacron E®, Procion H®, Cibacron F®, Cibacron C®, Basilen M®, Procion MX®, Levafix EA®, Drimarene K®, Drimarene R®, Levafix E®, Drimarene X®, Drimarene Z®, Cibacron T® and Remazol®.

The dye (B) can be grafted to the cationic polymer in the colorant composition or can be free in the colorant composition, or a mixture of both grafted and free molecules of dye (B) can be present. Pre-grafting the dye (B) to the cationic polymer can have the advantage of hastening the onset of color fastness once the colorant composition has been applied to a fiber-containing substrate because the dye will be covalently bonded to the three-dimensional network as soon as it is formed. Moreover, the dye (B) can also optionally have acid salt groups of the type outlined above in respect of the dye (A).

Further Components

As the colorant composition is aqueous, a certain amount of water is present. The amount of water present is not particularly limited, and can represent 20 wt.% of the composition, more suitably 60 wt.% and yet more suitably 90 wt.%.

It is preferable for safety, environmental impact and costs reasons that the solvent for the colorant composition is water. However, in some cases it can be preferable to include one or more co-solvents in the colorant composition. The use of one or several co-solvents in the colorant composition could be advantageous if the dye(s) used in the colorant composition have a low solubility in pure water. Co-solvents can also be advantageous if a colorant composition is desired that dries faster once it has been applied on a substrate. The choice of co-solvent(s) is not particularly limited, but it is generally preferable if the co-solvent is miscible with water, as a homogenous solvent mixture is more convenient. Suitable co-solvents include organic solvents such as alcohols, ketones, esters, ethers and nitriles, wherein representative examples include ethanol, methanol, n-proponal, i-propanol, n-butanol, i-butanol, t-butanol, acetone, isopropylacetate, 1,4-dioxane, tetrahydrofuran and acetonitrile. Particularly useful co-solvents include ethanol, methanol and acetone. Generally speaking, it is advantageous if a solvent system that solubilizes all components of the colorant composition as the colorant composition is easier to use in the form of a solution.

It can also be advantageous to include a wetting agent, e.g. a surfactant, in the colorant composition. One

advantage of including a wetting agent is that it helps to produce a more uniform color on substrates comprising hydrophobic fibers, such as synthetic fibers. Without wishing to be bound by theory, it is believed that this advantage arises because the wetting agent enables the typically hydrophilic colorant composition to cover the substrate (or part thereof) more evenly. The choice and amount of wetting agent used can be determined based upon the materials involved and as required by the user.

It can also be helpful to include antifoam agents in the colorant composition to avoid or limiting the formation of foam during the dyeing or printing process.

The pH of the colorant composition is not particularly limited, which is a further benefit of the present invention because this means that the pH can be tailored to other needs of the intended use of the composition, such as the type of fibers present. In some embodiments, a relatively mild pH such as from 5 to 9, from 6 to 8, or from 6.5 to 7.5 can be helpful, particularly where the colorant composition will be used to impart color to a material that will not tolerate harsher pH environments. A mild pH is also advantageous from the point of view of safety.

In other embodiments, a more alkaline environment is be used, such as from 7 to 12, 8 to 11 or 9 to 10, as this helps to promote the formation of bonds between the cationic polymer and crosslinker polymer, and also the formation of bonds with the dye (B) where relevant. An alkaline environment can assist bond formation between the cationic polymer and crosslinker polymer in a number of ways. On the one hand, and alkaline environment helps to make the amine groups of the cationic polymer more nucleophilic, and therefore more reactive towards the cross-linking groups of the crosslinker polymer. On other hand, the alkaline environment can help to absorb acidic byproducts of the cross-linking reaction that might otherwise retard further cross-linking. For example, the putative byproduct formed by reacting an amine group with a halohydrin group is HCl, but this would be neutralized in an alkaline environment. Any unwanted alkalinity remaining following the cross-linking reaction can be removed by washing with water, if desired.

It can also be advantageous to include inorganic or organic salts in the colorant composition. The use of salts such as these can increase the stability of the colorant composition against precipitation and they generally contribute to reducing the viscosity of the colorant composition. Without wishing to be bound by theory, it is believed that the addition of salt(s) provides this advantage by forming ionic interactions with the ionic functional groups of the dye and the cationic functional groups of the polyamine.

Use of the Colorant Composition in a Dyeing Process

One way in which the colorant composition can impart color to a fiber-containing substrate is to use the colorant composition in a dyeing process. Conceptually, a dyeing process is one in which a color is applied to the fiber-containing substrate over a continuous region. The continuous region can be the whole or part of the substrate (just one corner of a sheet can be dyed, for instance), but the dyed area is generally continuous, i.e. free from deliberate gaps. In contrast, a printing process involves the application of color in definite patterns of designs on a surface using one or more colors and each color can be applied in a discontinuous pattern.

The dyeing process can be conducted by immersing the whole or a part of the fiber-containing substrate in a composition comprising a dye compound or compounds. The versatility of the colorant composition means that there is no particular limitation on how this is conducted. For example, a fiber-containing substrate can be used in a batch dyeing process (also called exhaustion dyeing), wherein non-limiting examples include loose stock dyeing (autoclave), yarn dyeing (autoclave), hank dyeing, piece dyeing in rope form (winch beck, overflow, jet, airflow), piece dyeing in open-width form (winch, beam dyeing, jig dyeing, jigger) and piece dyeing (paddle, drum) processes. The fiber-containing substrate can also be used in a continuous or semi-continuous dyeing process, wherein non-limiting examples include pad-batch, pad-roll, pad-jig, pad-steam and pad-dry processes.

The method by which the fiber-containing substrate is brought into contact with the colorant composition is not particularly limited. Non-limiting examples of this contacting step include spraying the substrate with the colorant composition, immersing the substrate in the colorant composition or impregnation by other means. For instance, impregnation can be achieved by a so-called padding technique, wherein the fiber-containing substrate is contacted with the colorant composition before being passed through nip rollers. The squeezing action of the rollers helps to force the colorant composition into the fiber-containing substrate, such that the resulting cross-linking causes a high level of entanglement with the fibers of the substrate.

It can also be helpful to include a wetting agent, e.g. a surfactant, in the colorant composition if hydrophobic fibers, such as synthetic fibers, are present in the substrate. Including a wetting agent helps to provide a dyed region with more uniform color. The amount of wetting agent used can be determined based upon the materials involved and as required by the user.

Cross-linking can be conducted by any appropriate means. In many cases, due to the close proximity of the reagents and the types of reacting functional groups involved, cross-linking occurs spontaneously during the drying of the colorant composition and/or upon ageing, but it can also be helpful to promote cross-linking. For example, drying the substrate following application of the colorant composition will remove water and other volatile components of the

colorant composition, which brings the reactive groups of the separate polymers into closer proximity with one another. The drying step can be conducted by exposing the substrate/colorant composition to elevated temperatures and/or reduced pressure, wherein shorter drying times are associated with high temperatures and/or lower pressures. As a guide, drying can be conducted by exposing the substrate to temperatures of 50-150°C for 0.5-30 minutes at atmospheric pressure. Increasing the temperature of the substrate can also increase the rate of crosslinking directly, since the reactive groups will have greater energy. Any other conventional way of increasing the rate of reaction can also be used to promote cross-linking, such as photochemical rate acceleration.

The sequence of events described above is illustrated in Figure 1, wherein Figure 1A depicts a colorant composition containing cationic polymer 1 and crosslinker polymer 2, Figure 1B depicts the cationic and crosslinker polymers surrounding fiber 3 prior to cross-linking, and Figure 1C depicts the cross-linked three-dimensional network entangled with the fiber. Figure 1 depicts only a small portion of the entangled mixture of fibers and three-dimensional network in order to avoid undue complexity. As can be understood from Figure 1B, contacting the fiber-containing substrate with the cationic and crosslinker polymers causes them to pass between and surround fibers within the substrate. Then, once cross-linking occurs between the crosslinker polymer 2 and the amine groups 1a of the cationic polymer 1, the polymers are locked in place between and around the fibers of the substrate.

Figure 1C depicts only a small region around a portion of just a single fiber. In reality, the fibers and the chains of the cationic polymer will extend a distance though the material, and would therefore intertwine with neighboring fibers and polymer chains to form a matrix of different fibers and polymer chains. The cross-links formed by the crosslinker polymer serve to glue the fibers and cationic polymers together in the entangled matrix of fibers and polymer chains.

The entangled mixture comprising fibers of the substrate and the three-dimensional network of cationic and crosslinker polymers is such that, *without* the cross-links, the fibers, cationic polymer chains and crosslinker polymer chains would resemble a web of individual fibers and polymer chains of the cationic and crosslinker polymers. The non-cross-linked mixture of fibers and polymer chains can be visualized as an intricate matrix of strands similar to cooked spaghetti. However, the cross-links present within the three-dimensional network drastically alter the properties of the entangled mixture because the cross-links restrict the movement of the cationic and crosslinker chains in the matrix, relative to the fibers. This restriction of movement is thought to occur because the entwined mixture of fibers, cationic polymer chains and crosslinker polymer chains are knitted together by the cross-links, such that the three-dimensional network becomes anchored around the numerous fibers of the substrate.

This anchoring of the three-dimensional network to the substrate fibers has the effect of anchoring the dye to the substrate fibers because the dye molecules are bound to the three dimensional network. In the case of dye (A), the dye molecules are believed to be held in place by ionic attraction between the anionic groups of the dyes molecules and the cationic groups of the cationic polymer (and any other cationic groups present, such as cationic groups of the crosslinker polymer). In the case of dye (B), the dye molecules are believed to be held in place by covalent bonds between the dye molecules and the cationic polymer.

As will be understood from the above description, the cross-links in the three-dimensional network do not need to prevent all movement of the fibers, cationic polymer chains and crosslinker polymer chains. For example, there will generally be a degree of freedom of movement on a relatively local scale, i.e. short range movement, since the various strands of polymeric chains/ fibers will be able to 'wriggle' and bend etc. with the entangled matrix. However, the cross-links suppress long-range movement of the various components within the entangled mixture of fibers and polymer chains because the polymer chains and the substrate fibers are knitted together in the matrix. Accordingly, the polymer chains are incapable of completely escaping the fiber-containing substrate. In essence, the cross-links secure the entanglement.

The restriction of long range movement in the entangled mass is particularly useful with respect to the cationic polymer because firmly anchoring this polymer to the substrate fibers indirectly causes the dye molecules to be firmly anchored as well. Needless to say, this effect also applies to other components of the entangled mass that are able to retain dye molecules, such as the crosslinker polymer, because these other components are similarly anchored by entanglement and cross-linking.

## Use of the Colorant Composition in a Printing Process

Dye compounds can also be applied to the fiber-containing substrate using a printing technique. Conceptually, printing can be thought of as the application of application of color in definite patterns of designs on a surface using one or more colors, as opposed to a dyeing process in which a single color is applied in a continuous fashion to a region or the whole of the fiber-containing substrate.

There is no particular limitation on how the printing is conducted. Not-limiting examples include inkjet printing, laser printing, screen printing, lithography, flexography, gravure printing, pad printing, relief printing and application with a pen or brush. Inkjet printing, for example, is a widely-known and well-understood technique that requires little capital investment. Inkjet printing substrates such as polypropylene has previously proven a difficult challenge, but this challenge

is overcome by the present invention because the colorant composition is able to indirectly adhere dye molecules to these types of substrate.

Once the colorant composition has been contacted with the substrate by a printing method, the cationic and crosslinker polymers will surround fibers near the surface of the substrate in readiness for crosslinking. Without wishing to be bound by theory, it is believed that crosslinking proceeds in the manner described above in relation to the dyeing process, and can be accelerated by any of the means described above. Similarly, the sequence of events depicted in Figure 1 and described above apply equally to a printing process.

<u>Representative Substrate</u>

A person skilled in the art will appreciate that the colorant composition of the present invention can be used to impart color to a wide variety of fiber-containing substrates, even those that are traditionally considered to be inhospitable to hydrophilic dye molecules. As a guide, non-limiting examples of suitable fibers are described below in order to illustrate the versatility of the colorant composition.

The types of fibers present in the substrate can be natural or synthetic, and a mixture of different types of fiber can be present. For the avoidance of doubt, the term 'fiber' denotes short cut or staple fibers, as well as filaments. The fiber is typically water insoluble, meaning that it is unlikely to disintegrate when contacted with the aqueous colorant composition. The colorant composition can be applied to any type of fiber such as vegetable, wood, animal, mineral, synthetic, semi-synthetic, cellulose regenerated fibers. Examples of suitable fiber types include cellulose, viscose, lyocell, fiberglass, cotton, polyamide, polyalkenes such as polyethylene, polypropylene and polybutylene, polyesters such as polylactic acid and poly(alkylene terephthalate) and copolymers thereof. It is also envisaged that glass fibers/filaments can be used since the three-dimensional network does not need to covalently bond to the fibers.

Particularly suitable fibers include cellulose, viscose, lyocell, polyalkenes such as polyethylene and polybutylene, polyesters, a poly(alkylene terephthalate) and copolymers thereof. Sometimes it can useful to use a fully synthetic substrate, in which case the fibers in the substrate can consist of polyalkene or polyester fibers or a mixture or copolymer thereof.

There is no particular limitation on the diameters and lengths of the fibers present, partly because the three-dimensional network adapts to the shape of the fibers prior to cross-link formation. Instead, the diameters and lengths can be determined by the user based upon their knowledge of their art and depending upon the intended end use.

There is no particular limitation regarding the type of fibrous substrate that can be used for the invention, but suitable substrates can be a woven, knitted or nonwoven material. Preferred substrates are synthetic polyolefin spunbond or meltblown nonwovens or combination of thereof. The colorant composition is particularly well-suited to open fibrous webs because the gaps within the web allow the colorant composition to easily surround the fibers, which helps the cationic and crosslinker polymers to form the three-dimensional network around the fibers.

Spunbond refers to a material formed by extruding molten thermoplastic material as filaments from a plurality of fine capillary spinnerets with the diameter of the extruded filaments then being rapidly reduced as described in, for example, in US-4,340,563 US-3,692,618, US-3,802,817, US-3,338,992, US-3,341,394, US-3,502,763 and US-3,542,615. The shape of the spinnerets is not particularly limited, though it is usually circular. Spunbond fibers are generally not tacky when they are deposited onto a collecting surface. Spunbond fibers are generally continuous and have average diameters larger than 7 microns, more particularly, between about 10 and 20 microns.

Meltblown refers to a material formed by extruding a molten thermoplastic material through a plurality of fine die capillaries as molten threads or filaments into converging high velocity, usually hot, gas (e.g. air) streams which attenuate the filaments of molten thermoplastic material to reduce their diameter. The shape of the dye capillaries is not particularly limited, though they are usually circular. Thereafter, the meltblown fibers are carried by the high velocity gas stream and are deposited on a collecting surface to form a web of randomly dispersed meltblown fibers. Such a process is disclosed in, for example, US-3,849,241. Meltblown fibers are microfibers which may be continuous or discontinuous, are generally smaller than 10 microns in average diameter, and are generally tacky when deposited onto a collecting surface.

A combination of spunbond and meltblown materials can be a laminate in which some of the layers are spunbond and some are meltblown such as a spunbond/meltblown/spunbond (SMS) laminate and others, as disclosed in US-4,041,203, US-5,169,706, US-5,145,727, US-5,178,931 and US-5,188,885.

Spunbond or meltblown can be made from polypropylene, polyester, polyethylene, polyamide, or combinations thereof.

Spunbond can also be made of multi-component fibers. The multi-component fibers may be formed by methods, such as those described in US-6,074,590. Generally, multi-component fibers are formed by co-extrusion of at least two different components into one fiber or filament. The resulting fiber includes at least two different essentially continuous polymer phases. In one non-limiting embodiment, the multi-component fibers include bicomponent fibers. Such multi-component spunbond fibers are particularly useful as heat sealable material.

Another preferred nonwoven substrate is a drylaid carded nonwoven consolidated either chemically, thermally or by mechanical entanglements. Examples of nonwoven with mechanical entanglements are needlepunched or spunlaced nonwovens that are created by mechanically orienting and interlocking the fibers of a carded web. Useful ways to obtain such nonwovens are disclosed in US-5,928,973, US-5,895,623, US-5,009,747, US-4,154,889, US-3,473,205. The staple fibers are generally short fibers, such as in cotton, having a length of about 35 to 80 mm, or they can be short cut synthetic fibers having a length of about 35 to 80 mm, and size from about 1 to 30 decitex.

Another preferred nonwoven substrate is a wetlaid nonwoven. Wetlaid nonwovens are produced in a process similar to paper making. The nonwoven web is produced by filtering an aqueous suspension of fiber onto a screen conveyor belt or perforated drum. Additional water is then squeezed out of the web and the remaining water is removed by drying. Bonding may be completed during drying or a bonding agent, e.g. an adhesive, may be subsequently added to the dried web and then the web is cured. Techniques for wetlaying fibrous material are well known in the art as described in EP-A-0 889 151. Fibers used in wetlaying processes typically have a length from about 5 to 38mm and a size from 0.5 to 17 decitex.

The fiber-containing substrate can be formed exclusively of fibers or other components can be added as required. For example, wet strength additives can be added in order to improve the structural integrity of the substrate.

The substrate material can include further components as desired by the user. For example, the user might choose to add a binder in order to aid structural integrity. Examples of binders include acrylics, vinyl esters, vinyl chloride alkene polymers and copolymers, styrene-acrylic copolymers, styrene-butadiene copolymer, urethane polymers, and copolymers thereof, wherein vinyl acetate and/or ethylene vinyl acetate copolymers are particularly useful. Preferably said binder is a self-cross-linkable binder, e.g. with pendant cross-linking functionalities. Preferably the binder is hydrophilic. The binder can also contain starch or polyvinyl alcohol. The amount of binder present, if desired by the user, can be generally in the range of from 5 to 50 g/m$^2$ of the surface of the fiber-containing substrate. However, the substrate does not explicitly require a binder because the three-dimensional network surprisingly increases the structural strength of the substrate. This represents yet a further significant benefit of the present invention.

The substrate can, of course, include further components, as and when required by the user. For example, non-limiting examples of optional components include antistatic agents, fluoro-compounds, alcohol repellents, absorbents, mineral fillers, antimicrobial agents, chelating agents and combinations thereof.

## Examples

The present invention will now be illustrated by way of experimental Examples, but these should not be interpreted as limiting the scope of the present invention.

### Example 1

A dye solution was prepared by dissolving 0.4 g of Methyl Red Sodium salt (shown below) in 200 ml of water. A separate polymer composition was prepared by adding 110 g of a polyvinylamine having an average molecular weight of 340,000 a.m.u. (wherein <10% of the amine groups are capped with formyl groups) and 36 g of a polyamide amine-epichlorohydrin water solution at a solid percentage of 23% to 54 ml of water.

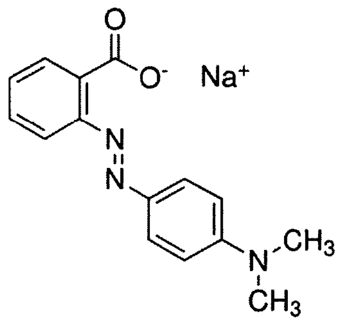

Sodium salt of methyl red

A colorant composition was produced by mixing the dye solution and the polymer composition followed by adjusting the pH to 10 with NaOH. The solid content of the resulting colorant composition was 6.61%.

The colorant composition was tested for its ability to color fiber-containing sheets. The colorant composition was first added to A4 (210mm x 297mm) handsheets of commercially available Polypropylene (PP) spunbond (60 g/m$^2$,

Grade 0050 , Fiberweb, USA ) using a size press (Pressure : 2.6 bar, Roll speed : 1.7 m/min) such that the dry weight add-on was approximately 8.5 g/m$^2$. The colorant composition was separately added to A4 (210 mm x 297mm) handsheets of commercially available poly lactic acid (PLA) spunbond (21 g/m$^2$; Ahlstrom Grade CD 55 O) using a size press (Pressure : 2.6 bar, Roll speed : 1.7 m/min) such that the dry weight add-on was approximately 1.6 g/m$^2$. The treated sheets were then dried on a plate dryer at 110 °C for 2 min and then transferred to an oven at 120 °C for 20 min.

The performance of the colorant composition was assessed by comparing the color of the treated sheets with that of untreated sheets. Color Difference Measurements (Δ E) are based on the Hunter Lab color space (www.hunterlab.com), where the z-axis represents the gray scale, 0= black and 100 = white. The other two perpendicular axes represent redness (a) to greenness (-a) and yellowness (b) to blueness (-b) with gray being the center of both axes. The color difference between two samples is the Euclidean distance between the two points in the Lab color space as given by the following equation, where ($L_1$, $a_1$, $b_1$) and ($L_2$, $a_2$, $b_2$) are the locations in the color space before and after washing or treatment, respectively. A ΔE of about 2.3 corresponds to a "just noticeable difference".

$$Eq.1 \quad \Delta E_{ab} = \sqrt{(L_2 - L_1)^2 + (a_2 - a_1)^2 + (b_2 - b_1)^2}$$

L, a, b, measurements were made on untreated sample, and treated samples using a FRANK - PTI spectrophotomer with TouchScreen M Version 2.0 Software, and the total color difference was calculated using Eq. 1. The results are reported below in Table 1.

Table 1

| Sample | L value | a value | b value |
|---|---|---|---|
| Untreated PP spunbond | 91.34 | -0.3 | -0.28 |
| Treated PP spunbond | 74.93 | 18.92 | 60.82 |
| Untreated PLA spunbond | 83.9 | -0.01 | -0.05 |
| Treated PLA spunbond | 77.93 | 1.93 | 40.45 |

According to L, a, b, values, the treated samples have taken on a significant amount of yellow color.

The samples treated with the colorant composition were then either washed in hot water (70 °C) (one A4 handsheet in 0.5 liter) or in ethanol at ambient temperature (1/2 A4 handsheet in 200 ml) for 10 minutes. The washed sheets were then dried and were measured as before using the L, a, b, color system. The results are shown in Table 2.

Table 2

| Sample | L value | a value | b value |
|---|---|---|---|
| PP spunbond with Methyl red sodium salt recipe after washing in hot water | 77.4 | 16.01 | 55.64 |
| PP spunbond with Methyl red sodium salt recipe after washing in solvent (Ethanol) | 75.28 | 18.35 | 58.45 |
| PLA spunbond with Methyl red sodium salt recipe after washing in hot water | 81.59 | 0.7 | 28.39 |
| PLA spunbond with Methyl red sodium salt recipe after washing in solvent (Ethanol) | 78.96 | 1.61 | 36 |

The color difference values (ΔE) for these samples, relative to the unwashed samples, are shown below in Table 3.

Table 3

| Sample | Solvent | Delta E |
|---|---|---|
| PP treated and washed | Hot Water | 6.45 |
| PP treated and washed | Ethanol | 2.35 |
| PLA treated and washed | Hot Water | 12.66 |
| PLA treated and washed | Ethanol | 8 |

As shown by these results, not only was the colorant composition successful in coloring both polypropylene

and polylactic acid substrates, but it demonstrated very good resistance to washing.

**Example 2**

A dye solution was prepared by dissolving 0.4 g of Indosol Red BA 150 P (structure shown below, obtained from Clariant) in 200 ml of water. A separate polymer composition was prepared by adding 110 g of a polyvinylamine having an average molecular weight of 340,000 a.m.u. (wherein <10% of the amine groups are capped with formyl groups) and 36 g of polyamide amine-epichlorohydrin (PAE) resin water solution at a solid percentage of 23% to 54 ml of water. A separate salt composition was prepared by dissolving 10 g of sodium sulfate in 100 ml of water.

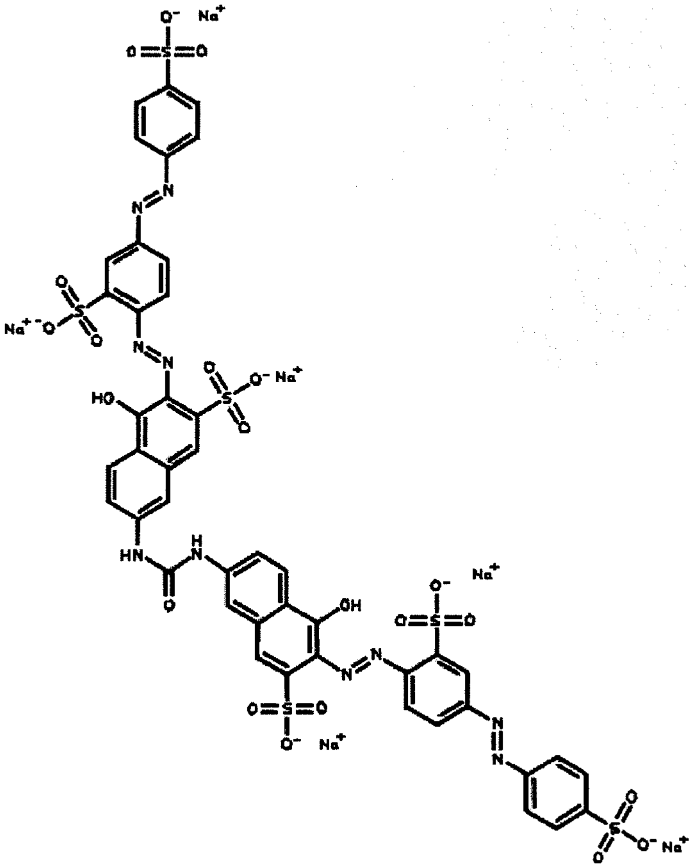

Indosol Red BA 150 P

The polymer composition and salt composition were mixed together under stirring, and then 100 ml of the dye solution was added dropwise under stirring. The pH was then adjusted to 10 with NaOH. The solid content of the final colorant composition was 9.07 %.

The colorant composition was tested for its ability to color fiber-containing sheets. First, the colorant composition was added to A4 (210mm x 297mm) handsheets of commercially available Polypropylene (PP) spunbond (60 g/$m^2$, Grade 0050 , Fiberweb, USA ) using a size press (Pressure : 2.6 bar, Roll speed : 1.7 m/min) such that the dry weight add-was approximately 11.2 g/$m^2$. Separately, the colorant composition was added to A4 (210 mm x 297mm) handsheets of commercially available poly lactic acid (PLA) spunbond (21 g/$m^2$; Ahlstrom Grade CD 55 O) using a size press (Pressure : 2.6 bar, Roll speed : 1.7 m/min) such that the dry weight add-was approximately 2 g/$m^2$. The treated sheets were then dried on plate dryer at 110 °C for 2 min and transferred to an oven at 120 °C for 20 min.

The performance of the colorant composition was assessed in the same manner as in Example 1, and the results are reported in Table 4 below.

Table 4

| Sample | L value | a value | b value |
|---|---|---|---|
| Untreated PP spunbond | 91.34 | -0.3 | -0.28 |

(continued)

| Sample | L value | a value | b value |
|---|---|---|---|
| Treated PP spunbond | 61.05 | 30.98 | 5.39 |
| Untreated PLA spunbond | 83.9 | -0.01 | -0.05 |
| Treated PLA spunbond | 66.61 | 29.85 | 2.71 |

According to L, a, b, values, the treated samples have taken on a significant amount of red color.

The samples treated with the colorant composition were then either washed in hot water (70 °C) (one A4 handsheet in 0.5 liter) or in ethanol at ambient temperature (1/2 A4 handsheet in 200 ml) for 10 minutes. The washed sheets were then dried and were measured as before using the L, a, b, color system. The results are shown in Table 5.

Table 5

| Sample | L value | a value | b value |
|---|---|---|---|
| PP spunbond with Indosol Red recipe after washing in hot water | 65.48 | 34.48 | 8.62 |
| PP spunbond with Indosol Red recipe after washing in solvent (Ethanol) | 62.9 | 32.99 | 6.81 |
| PLA spunbond with Indosol Red recipe after washing in hot water | 68.47 | 30.39 | 1.55 |
| PLA spunbond with Indosol Red recipe after washing in solvent (Ethanol | 67.47 | 31.96 | 2.56 |

The color difference values (ΔE) for these samples, relative to the unwashed samples, are shown below in Table 6.

Table 6

| Sample | Solvent | Delta E |
|---|---|---|
| PP treated and washed | Hot Water | 6.5 |
| PP treated and washed | Ethanol | 1.8 |
| PLA treated and washed | Hot Water | 5.1 |
| PLA treated and washed | Ethanol | 1.8 |

As in Example 1, the colorant composition successfully colored both polypropylene and polylactic acid substrates and the color had very good resistance to washing.

**Example 3**

A dye solution was prepared by dissolving 0.3 g of Remazol Brilliant blue R from Dyestar (structure below) in 60 ml of water. A separate polymer composition was prepared by dissolving 1g of sodium hydroxide and 3.6 g of sodium sulfate in 60 ml of water, and then adding 30 g a of a polyvinylamine solution at a concentration of 12% and having an average molecular weight of 340,000 a.m.u. (wherein <10% of the amine groups are capped with formyl groups) and 10 g of polyamide amine-epichlorohydrin (PAE) resin water solution at a solid percentage of 23%. A separate salt composition was prepared by dissolving 0.15 g of sodium sulfate in 20 ml of water.

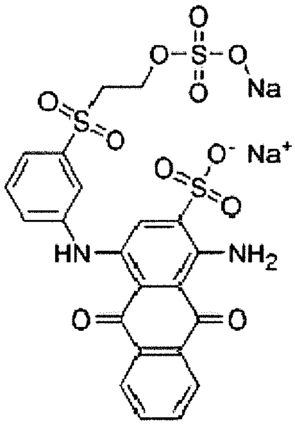

Remazol Brilliant blue R

The polymer composition and the salt composition were mixed together under stirring, and then the dye solution was added dropwise under vigorous stirring. The solid content of the final colorant composition was adjusted to 6% w/w by addition of water and kept under stirring for one hour before use.

The colorant composition was tested for its ability to color fiber-containing sheets. Firstly, the colorant composition was added to A4 (210mm x 297mm) handsheets of commercially available Polypropylene (PP) spunbond (60 g/m$^2$, Grade 0050 , Fiberweb, USA ) using a size press (Pressure : 2.6 bar, Roll speed : 1.7 m/min) such that the dry weight was approximately 7.1 g/m$^2$. separately, the colorant composition was added to A4 (210 mm x 297mm) handsheets of commercially available poly lactic acid (PLA) spunbond (21 g/m$^2$; Ahlstrom Grade CD 55 O) using a size press (Pressure : 2.6 bar, Roll speed : 1.7 m/min) such that the dry weight was approximately 1.2 g/m$^2$. The treated sheets were then dried on plate dryer at 110 °C for 2 min and then placed in an oven at 120 °C for 20 min.

The performance of the colorant composition was assessed in the same manner as in Example 1, and the results are reported in Table 7 below.

Table 7

| Sample | L value | a value | b value |
|---|---|---|---|
| Untreated PP spunbond | 91.34 | -0.3 | -0.28 |
| Treated PP spunbond | 58.09 | -3.32 | -30.5 |
| Untreated PLA spunbond | 83.9 | -0.01 | -0.05 |
| Treated PLA spunbond | 60.73 | -3.52 | -27.23 |

According to L, a, b, values, the treated samples have taken on a significant amount of blue color.

The samples treated with the colorant composition were then either washed in hot water (70 °C) (one A4 handsheet in 0.5 liter) or in ethanol at ambient temperature (1/2 A4 handsheet in 200 ml) for 10 minutes. The washed sheets were then dried and were measured as before using the L, a, b, color system. The results are shown in Table 8.

Table 8

| Sample | L value | a value | b value |
|---|---|---|---|
| PP spunbond with Remazol Blue recipe after in hot water | 59.63 | -3.89 | -29.67 |
| PP spunbond with Remazol Blue recipe after washing in solvent (Ethanol) | 57.67 | -2.69 | -30.63 |
| PLA spunbond with Remazol Blue recipe after washing in hot water | 66.82 | -4.22 | -24.5 |
| PLA spunbond with Remazol Blue recipe after washing in solvent (Ethanol) | 59.93 | -3.88 | -27.2 |

The color difference values (ΔE) for these samples, relative to the unwashed samples, are shown below in Table 6.

Table 9

| Sample | Solvent | Delta E |
|---|---|---|
| PP treated and washed | Hot Water | 1.9 |
| PP treated and washed | Ethanol | 1.9 |
| PLA treated and washed | Hot Water | 6.7 |
| PLA treated and washed | Ethanol | 1.2 |

As with Examples 1 and 2, the colored sheets exhibited excellent resistance to washing with water and a representative organic solvent.

## Claims

1. An aqueous colorant composition comprising:

   a water-soluble cationic polymer bearing an overall positive charge in an aqueous medium at pH values of 10 or lower and comprising primary amine groups;
   a water-soluble crosslinker polymer including repeating units comprising halohydrin and/or epoxide groups that are capable of forming covalent crosslinks with the primary amine groups of the cationic polymer; and
   a dye (A) comprising at least one acid salt group per molecule; and/or
   a dye (B) that is capable of forming at least one covalent bond per dye molecule with the cationic polymer.

2. The composition according to Claim 1, wherein the halohydrin groups of the crosslinker polymer are chlorohydrin groups according to the following Formula (I):

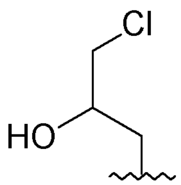

(I)

3. The composition according to Claim 1 or Claim 2, wherein the crosslinker polymer contains quaternary ammonium groups in the polymer.

4. The composition according to Claim 2, wherein the crosslinker polymer is a diallyl(3-chloro-2-hydroxypropyl)amine hydrochloride-diallyldimethylammonium chloride copolymer having the repeating units illustrated in following Formula (II):

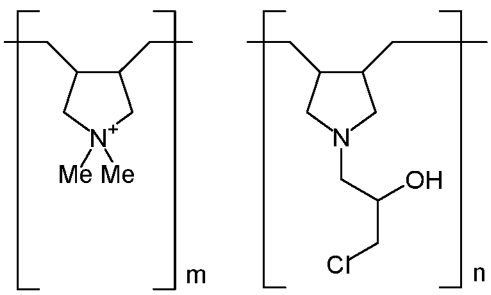

(II)

   wherein the ratio of m:n in the polymer is in the range of from 1:9 to 9:1.

5. The composition according to any preceding claim, wherein the average molecular weight of the crosslinker polymer in isolation is at least 1,000, preferably higher than 20,000.

6. The composition according any preceding claim, wherein the cationic polymer is at least one of poly(allyl amine), poly(ethylene imine), partially hydrolyzed poly(vinylformamide), polyvinylamide, chitosan and copolymers of the mentioned polyamines with any type of monomers.

7. The composition according any preceding claim, wherein the average molecular weight of the cationic polymer in isolation is at least 5,000, preferably higher than 100,000.

8. The composition according to Claim 6, wherein the cationic polymer in isolation comprises side-chains having quaternary ammonium groups, preferably wherein the cationic polymer has side chains formed by grafting reacting the cationic polymer with glycidyl trimethylammonium chloride and/or 3-chloro-2-hydroxypropyl trimethylammonium chloride as grafting reactants.

9. The composition according to any preceding claim, wherein the dye is dye (A) and the at least one acid salt group is at least one sulfonate group and/or at least one carboxylate group.

10. The composition according to any of Claims 1 to 8, wherein the dye is dye (B) and is capable of forming one covalent bond per dye molecule with the cationic polymer.

11. The composition according to any of Claims 1 to 8 or 10, wherein the dye is dye (B) and at least some of the molecules of dye (B) are covalently bonded to the cationic polymer in the colorant composition.

12. Use of a composition according to any preceding claim to dye a fiber-containing substrate, wherein at least some covalent bonds are formed between the primary amine groups of cationic polymer and the halohydrin and/or epoxide groups of the crosslinker polymer after the colorant composition has been contacted with the fiber-containing substrate.

13. Use of a composition according to any of Claims 1 to 11 to form a printed image on a fiber-containing substrate, wherein at least some covalent bonds are formed between the primary amine groups of cationic polymer and the halohydrin and/or epoxide groups of the crosslinker polymer after the colorant composition has been contacted with the fiber-containing substrate.

14. The use according to Claim 12 or Claim 13, wherein the formation of the covalent bonds between the primary amine groups of cationic polymer and the halohydrin and/or epoxide groups of the crosslinker polymer is promoted by removing water from the fiber-containing substrate and the colorant composition.

15. The use according to any of Claims 12 to 14, wherein at least some of the fibers in the fiber-containing substrate are vegetable, wood, animal, mineral, synthetic, semi-synthetic and/or cellulose regenerated fibers, preferably wherein at least some of the fibers in the fiber-containing substrate are synthetic fibers.

## Patentansprüche

1. Wässrige Farbmittelzusammensetzung, umfassend:

   ein wasserlösliches kationisches Polymer, welches in einem wässrigen Medium bei pH-Werten von 10 oder weniger eine positive Gesamtladung trägt und primäre Amingruppen umfasst;
   ein wasserlösliches Vernetzerpolymer, welches Halohydrin- und/oder Epoxidgruppen umfassende Wiederholungseinheiten enthält, die in der Lage sind, kovalente Vernetzungen mit den primären Amingruppen des kationischen Polymers auszubilden; und
   einen Farbstoff (A), welcher mindestens eine Säuresalzgruppe pro Molekül umfasst; und/oder
   einen Farbstoff (B), welcher in der Lage ist, mindestens eine kovalente Bindung pro Farbstoffmolekül mit dem kationischen Polymer auszubilden.

2. Zusammensetzung gemäß Anspruch 1, wobei die Halohydringruppen des Vernetzerpolymers Chlorhydringruppen gemäß der folgenden Formel (I) sind:

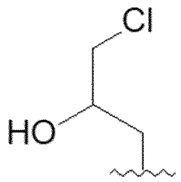

(I)

3. Zusammensetzung gemäß Anspruch 1 oder Anspruch 2, wobei das Vernetzerpolymer quaternäre Ammoniumgruppen im Polymer enthält.

4. Zusammensetzung gemäß Anspruch 2, wobei das Vernetzerpolymer ein Diallyl(3-chlor-2-hydroxypropyl)aminhydrochlorid-Diallyldimethylammoniumchlorid-Copolymer mit den in der folgenden Formel (II) dargestellten Wiederholungseinheiten ist:

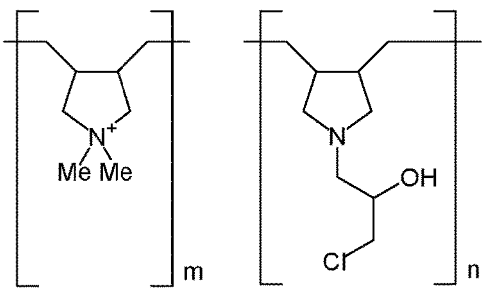

(II)

wobei das Verhältnis von m:n in dem Polymer im Bereich von 1:9 bis 9:1 liegt.

5. Zusammensetzung gemäß einem der vorhergehenden Ansprüche, wobei das durchschnittliche Molekulargewicht des isolierten Vernetzerpolymers mindestens 1.000, vorzugsweise mehr als 20.000 beträgt.

6. Zusammensetzung gemäß einem der vorhergehenden Ansprüche, wobei das kationische Polymer mindestens eines ist von Poly(allylamin), Poly(ethylenimin), partiell hydrolysiertes Poly(vinylformamid), Polyvinylamid, Chitosan und Copolymere der genannten Polyamine mit einer beliebigen Art von Monomeren.

7. Zusammensetzung gemäß einem der vorhergehenden Ansprüche, wobei das durchschnittliche Molekulargewicht des isolierten kationischen Polymers mindestens 5.000, vorzugsweise mehr als 100.000 beträgt.

8. Zusammensetzung gemäß Anspruch 6, wobei das isolierte kationische Polymer Seitenketten mit quaternären Ammoniumgruppen umfasst, wobei das kationische Polymer vorzugsweise Seitenketten aufweist, die durch Pfropfreaktion des kationischen Polymers mit Glycidyltrimethylammoniumchlorid und/oder 3-Chlor-2-hydroxypropyltrimethylammoniumchlorid als Pfropfreaktanten gebildet werden.

9. Zusammensetzung gemäß einem der vorhergehenden Ansprüche, wobei der Farbstoff ein Farbstoff (A) ist und die mindestens eine Säuresalzgruppe mindestens eine Sulfonatgruppe und/oder mindestens eine Carboxylatgruppe ist.

10. Zusammensetzung gemäß einem der Ansprüche 1 bis 8, wobei der Farbstoff ein Farbstoff (B) ist und in der Lage ist, eine kovalente Bindung pro Farbstoffmolekül mit dem kationischen Polymer zu bilden.

11. Zusammensetzung gemäß einem der Ansprüche 1 bis 8 oder 10, wobei der Farbstoff ein Farbstoff (B) ist und mindestens einige der Moleküle des Farbstoffs (B) kovalent an das kationische Polymer in der Farbmittelzusammensetzung gebunden sind.

12. Verwendung einer Zusammensetzung gemäß einem der vorhergehenden Ansprüche zum Färben eines faserhaltigen Substrats, wobei mindestens einige kovalente Bindungen zwischen den primären Amingruppen des kationischen Polymers und den Halohydrin- und/oder Epoxidgruppen des Vernetzerpolymers gebildet werden, nachdem die Farbmittelzusammensetzung mit dem faserhaltigen Substrat in Kontakt gebracht wurde.

13. Verwendung einer Zusammensetzung gemäß einem der Ansprüche 1 bis 11 zur Erzeugung eines Druckbildes auf

einem faserhaltigen Substrat, wobei mindestens einige kovalente Bindungen zwischen den primären Amingruppen des kationischen Polymers und den Halohydrin- und/oder Epoxidgruppen des Vernetzerpolymers gebildet werden, nachdem die Farbmittelzusammensetzung mit dem faserhaltigen Substrat in Kontakt gebracht wurde.

**14.** Verwendung gemäß Anspruch 12 oder Anspruch 13, wobei die Bildung der kovalenten Bindungen zwischen den primären Amingruppen des kationischen Polymers und den Halohydrin- und/oder Epoxidgruppen des Vernetzerpolymers durch Entfernen von Wasser aus dem faserhaltigen Substrat und der Farbmittelzusammensetzung gefördert wird.

**15.** Verwendung gemäß einem der Ansprüche 12 bis 14, wobei mindestens einige der Fasern in dem faserhaltigen Substrat Pflanzen-, Holz-, Tier-, Mineral-, Synthetik-, Halbsynthetik- und/oder Zelluloseregeneratfasern sind, wobei vorzugsweise mindestens einige der Fasern in dem faserhaltigen Substrat Synthetikfasern sind.

## Revendications

**1.** Composition de colorant aqueuse comprenant :

un polymère cationique soluble dans l'eau portant une charge positive globale dans un milieu aqueux à des valeurs de pH de 10 ou moins et comprenant des groupes amine primaire ;
un polymère réticulant soluble dans l'eau incluant des unités répétitives comprenant des groupes halohydrine et/ou époxyde qui sont capables de former des réticulations covalentes avec les groupes amine primaire du polymère cationique ; et
un colorant (A) comprenant au moins un groupe sel d'acide par molécule ; et/ou
un colorant (B) capable de former au moins une liaison covalente par molécule de colorant avec le polymère cationique.

**2.** Composition selon la revendication 1, dans laquelle les groupes halohydrine du polymère réticulant sont des groupes chlorhydrine selon la formule (I) suivante :

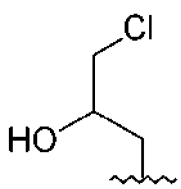
(I)

**3.** Composition selon la revendication 1 ou la revendication 2, dans laquelle le polymère réticulant contient des groupes ammonium quaternaire dans le polymère.

**4.** Composition selon la revendication 2, dans laquelle le polymère réticulant est un copolymère d'hydrochlorure de diallyl(3-chloro-2-hydroxypropyl)amine-chlorure de diallyldiméthylammonium présentant les unités répétitives illustrées dans la formule (II) suivante :

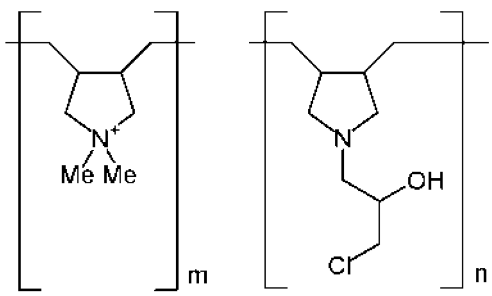
(II)

dans laquelle le rapport m:n dans le polymère est dans la plage de 1:9 à 9:1.

5. Composition selon une quelconque revendication précédente, dans laquelle le poids moléculaire moyen du polymère réticulant isolé est d'au moins 1 000, de préférence supérieur à 20 000.

6. Composition selon une quelconque revendication précédente, dans laquelle le polymère cationique est au moins un parmi poly(allylamine), poly(éthylèneimine), poly(vinylformamide) partiellement hydrolysé, polyvinylamide, chitosane et des copolymères des polyamines mentionnées avec tout type de monomères.

7. Composition selon une quelconque revendication précédente, dans laquelle le poids moléculaire moyen du polymère cationique isolé est d'au moins 5 000, de préférence supérieur à 100 000.

8. Composition selon la revendication 6, dans laquelle le polymère cationique isolé comprend des chaînes latérales présentant des groupes ammonium quaternaire, de préférence dans laquelle le polymère cationique présente des chaînes latérales formées par réaction de greffage du polymère cationique avec du chlorure de glycidyltriméthylammonium et/ou du chlorure de 3-chloro-2-hydroxypropyltriméthylammonium en tant que réactifs de greffage.

9. Composition selon une quelconque revendication précédente, dans laquelle le colorant est le colorant (A) et le au moins un groupe sel d'acide est au moins un groupe sulfonate et/ou au moins un groupe carboxylate.

10. Composition selon l'une quelconque des revendications 1 à 8, dans laquelle le colorant est le colorant (B) et est capable de former une liaison covalente par molécule de colorant avec le polymère cationique.

11. Composition selon l'une quelconque des revendications 1 à 8 ou 10, dans laquelle le colorant est le colorant (B) et au moins certaines des molécules de colorant (B) sont liées de manière covalente au polymère cationique dans la composition de colorant.

12. Utilisation d'une composition selon une quelconque revendication précédente pour teindre un substrat contenant des fibres, dans laquelle au moins certaines liaisons covalentes sont formées entre les groupes amine primaire du polymère cationique et les groupes halohydrine et/ou époxyde du polymère réticulant après que la composition de colorant ait été mise en contact avec le substrat contenant des fibres.

13. Utilisation d'une composition selon l'une quelconque des revendications 1 à 11 pour former une image imprimée sur un substrat contenant des fibres, dans laquelle au moins certaines liaisons covalentes sont formées entre les groupes amine primaire du polymère cationique et les groupes halohydrine et/ou époxyde du polymère réticulant après que la composition de colorant ait été mise en contact avec le substrat contenant des fibres.

14. Utilisation selon la revendication 12 ou la revendication 13, dans laquelle la formation des liaisons covalentes entre les groupes amine primaire du polymère cationique et les groupes halohydrine et/ou époxyde du polymère réticulant est favorisée en éliminant de l'eau à partir du substrat contenant des fibres et de la composition de colorant.

15. Utilisation selon l'une quelconque des revendications 12 à 14, dans laquelle au moins certaines des fibres dans le substrat contenant des fibres sont des fibres végétales, de bois, animales, minérales, synthétiques, semi-synthétiques et/ou régénérées de cellulose, de préférence dans laquelle au moins certaines des fibres dans le substrat contenant des fibres sont des fibres synthétiques.

Figure 1

A

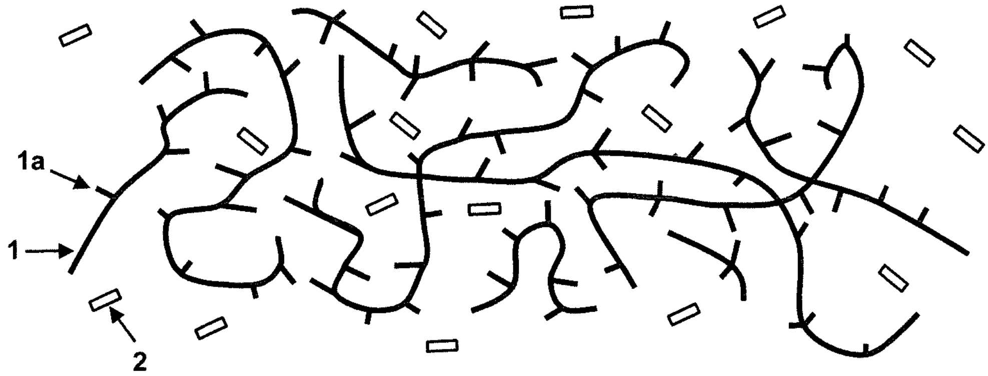


B

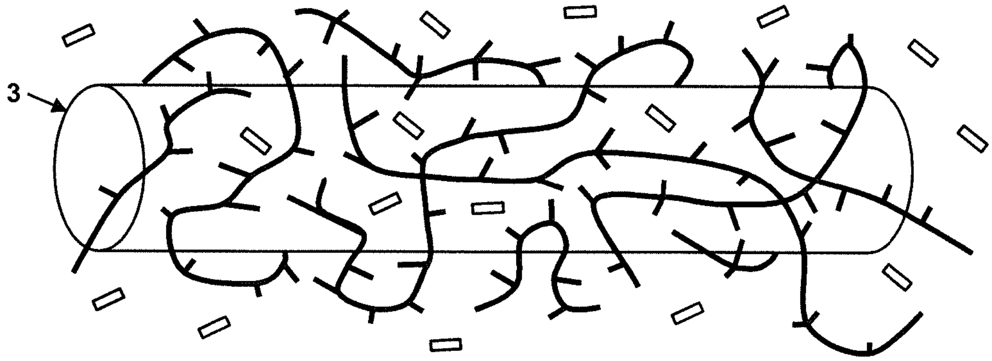


C

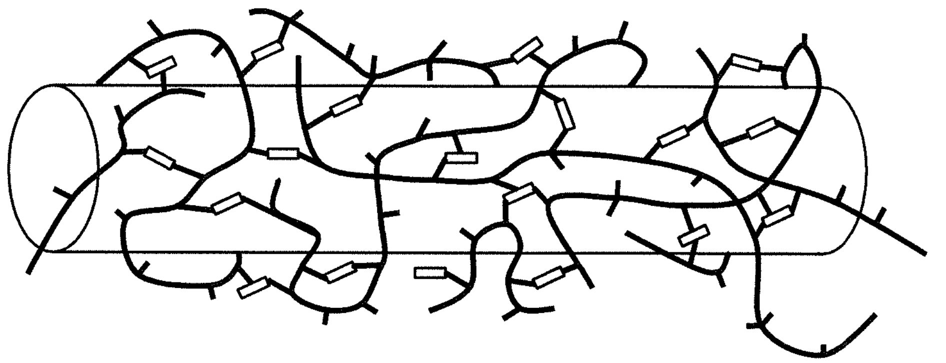

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4171404 A
- US 4340563 A
- US 3692618 A
- US 3802817 A
- US 3338992 A
- US 3341394 A
- US 3502763 A
- US 3542615 A
- US 3849241 A
- US 4041203 A
- US 5169706 A
- US 5145727 A
- US 5178931 A
- US 5188885 A
- US 6074590 A
- US 5928973 A
- US 5895623 A
- US 5009747 A
- US 4154889 A
- US 3473205 A
- EP 0889151 A